# FASCICULE DE BREVET EUROPEEN

(11) **EP 2 134 604 B1**
(45) Date de publication et mention de la délivrance du brevet: **11.01.2012**
(21) Numéro de dépôt: 08788024.1
(22) Date de dépôt: 19.03.2008
(51) Int. Cl.: B64D 15/12, F02C 7/047

(54) **DISPOSITIF DE DEGIVRAGE D'UNE ENTREE D'AIR D'UNE TURBINE A GAZ**
VORRICHTUNG ZUR ENTEISUNG DES LUFTEINLASSES EINER GASTURBINE
DEVICE FOR DE-ICING THE AIR INTAKE OF A GAS TURBINE

(30) Priorité: 19.03.2007 FR 0753900
(43) Date de publication de la demande: 23.12.2009
(73) Titulaire: Turbomeca, 64510 Bordes (FR)
(72) Inventeur: HAEHNER, Edgar, F-64510 Bordes (FR); ROYER, Eric, F-64160 Serres Morlaas (FR)
(74) Mandataire: Balesta, Pierre
(86) Numéro de dépôt international: PCT/FR2008/050475
(87) Numéro de publication internationale: WO 2008/132376

(56) Documents cités:
- FR-A- 2 346 217
- GB-A- 2 292 422
- US-A1- 2002 182 062
- US-A1- 2003 052 230
- US-B1- 6 207 940

## Description

La présente invention concerne le domaine des moteurs à combustion interne aéronautiques et industriels et en particulier mais non exclusivement celui des turbines à gaz d'aéronefs tels les turbomoteurs qui équipent les hélicoptères.

Elle concerne plus particulièrement les moteurs à combustion interne telles par exemple les turbines à gaz qui comportent une entrée d'air et qui sont destinées à être utilisées dans des conditions où du givre peut se former dans l'entrée d'air, notamment sur une grille de protection disposée dans ladite entrée d'air dont la fonction est d'empêcher les corps étrangers de pénétrer dans le moteur.

Il est bien connu que sous certaines conditions météorologiques, du givre peut se former dans l'entrée d'air de la turbine à gaz dans des proportions telles que l'accumulation de givre peut conduire à l'obturation partielle de l'entrée d'air de la turbine de gaz, pouvant provoquer l'endommagement total ou partiel de la turbine à gaz.

Dans le cas des hélicoptères, ce phénomène de givrage peut apparaître notamment lorsque l'hélicoptère évolue dans une atmosphère humide et froide, par exemple en montagne ou à proximité d'une étendue d'eau.

On comprend aisément que l'existence d'un risque de givrage contraint l'aéronef à être immobilisé au sol pour éviter tout risque de perte de puissance, voire d'arrêt de moteur en vol.

La présente invention concerne donc un dispositif, de dégivrage d'une entrée d'air d'une turbine à gaz équipant un turbomoteur d'hélicoptère par exemple.

Parmi les dispositifs de dégivrage déjà connus, on peut noter ceux qui utilisent de l'air sous pression prélevé en sortie d'un étage de compression de la turbine à gaz dans le but de faire fondre le givre.

Dans ces dispositifs, l'air sous pression est amené depuis la sortie de l'étage de compression vers l'entrée d'air pour réchauffer des zones du moteur à dégivrer comme par exemple des organes fixes tel le conduit d'entrée d'air du moteur, ou bien des organes mobiles telles les pales de pré-rotation généralement équipées d'articulations qui sont localisées immédiatement en amont de la roue de compresseur. Un inconvénient majeur de ces dispositifs est qu'ils sont particulièrement énergivores car ils prélèvent une quantité significative d'énergie nécessaire au cycle thermodynamique du moteur telle la turbine à gaz en pénalisant fortement le rendement global du moteur ainsi que le niveau maximal de puissance disponible du moteur. Ce mode de prélèvement d'énergie est également peu efficace car l'opération de chauffage entraîne un refroidissement indésirable consécutif à la détente de l'air dans la zone concernée.

Dans le cas où le moteur est une turbine à gaz, un autre inconvénient est que le dégivrage n'est pas possible lorsque la turbine à gaz fonctionne au ralenti, le compresseur ne fournissant alors pas suffisamment d'air dont la pression, la température et le débit permettent le dégivrage. On comprend donc que dans ce cas, l'opération de dégivrage est peu efficace lors des phases d'approches préparatoires à l'atterrissage et lors de la phase d'atterrissage.

Par ailleurs, il est connu de GB 22 92 422 de dégirer moteur de turbojet à l'aide d'un générateur de micro-ondes.

Un but d'une entrée d'air d'une turbine à gare de la présente invention est de proposer un dispositif de dégivrage remédiant aux inconvénients mentionnés ci-dessus, qui est faiblement énergivore tout en pouvant être activé même lorsque la turbine fonctionne au ralenti ou bien est à l'arrêt.

L'invention atteint son but par le fait que le dispositif de dégivrage conforme à l'invention comporte une enceinte essentiellement métallique pour l'entrée d'air dans le moteur, ladite enceinte comportant une première ouverture pour l'entrée d'air dans l'enceinte, ladite première ouverture étant munie d'une première grille essentiellement métallique, l'enceinte comportant en outre une seconde ouverture destinée à diriger l'air vers une entrée de la turbine à gaz, ledit dispositif comportant en outre des moyens pour générer dans l'enceinte des ondes électromagnétiques ayant une fréquence permettant de faire fondre du givre, la seconde ouverture étant pourvue d'une seconde grille essentiellement métallique et les premières et seconde grilles formant un écran electromagnétique dégivront.

De préférence, l'entrée du moteur est constituée par une entrée d'un étage de compression de la turbine à gaz.

Selon l'invention, les ondes générées sont envoyées dans l'enceinte pour faire fondre le givre contenu dans l'enceinte ou sur la première grille en provoquant une excitation des molécules d'eau qui le composent entrainant l'élévation de température du givre et donc sa fonte.

Par ailleurs, le givre fixé à la première grille essentiellement métallique est également chauffé par la grille essentiellement métallique qui voit sa température s'élever du fait de l'interaction entre les ondes électromagnétiques et la nature essentiellement métallique de la première grille.

Par « essentiellement métallique », on entend au sens de l'invention que la pièce concernée, notamment l'enceinte ou la première grille, peut être réalisée dans un matériau isolant, tel un matériau composite, comportant un revêtement de surface à base de métal.

Les pièces, c'est-à-dire l'enceinte et les grilles peuvent être indifféremment faites dans un matériau de nature métallique ou essentiellement métallique.

De telles pièces permettent avantageusement de réduire la masse du dispositif tout en favorisant la performance du dispositif.

En effet, en fonction du ou des matériaux constituant le revêtement de surface, on peut définir sur les parois de l'enceinte ou sur au moins la première grille, des zones réfléchissantes, des zones absorbantes ou des zones partiellement absorbantes et partiellement réfléchissantes, selon l'effet que l'on souhaite obtenir.

L'utilisation d'un matériau absorbant contribuera à créer une paroi chaude grâce à l'absorption de l'énergie électromagnétique et, à l'inverse, un matériau réfléchissant l'énergie électromagnétique, tel l'or, contribuera à créer une paroi froide.

On pourra également choisir un matériau permettant tant l'absorption des ondes que le développement de courants induits. Cette dernière propriété du matériau présente en l'espèce l'avantage d'élever la température de la paroi sur laquelle du givre est susceptible de se former afin d'en éviter la formation.

Il s'ensuit que le givre pourra être fondu grâce à l'effet thermique dû à l'absorption des ondes électromagnétiques par le matériau absorbant et/ou par l'excitation des molécules d'eau du givre grâce aux ondes électromagnétiques, ces ondes étant réfléchies par les parois réfléchissantes et/ou sont des ondes évanescentes.

Grâce à la présente invention, il est donc avantageusement possible de se dispenser de réchauffer les pales de pré-rotation, grâce à quoi il n'est plus nécessaire de prévoir un dispositif de dégivrage spécifique pour ces pales ; ceci permet de simplifier l'architecture du moteur.

Avantageusement, la fréquence des ondes est sensiblement égale à la fréquence de résonnance d'une molécule d'eau.

Les ondes électromagnétiques sont donc préférentiellement des micro-ondes.

Comme la fréquence des micro-ondes est sensiblement égale à la fréquence de résonnance d'une molécule d'eau, les molécules d'eau constituant le givre vibrent en entrant en résonnance si bien qu'elles absorbent largement l'énergie transportée par les micro-ondes, en conséquence de quoi leur température s'élève au moins jusqu'à leur température de fusion, faisant ainsi fondre le givre.

Grâce à l'invention, la fonte du givre est obtenue sans chauffer le volume d'air qui transite par l'entrée d'air.

Préférentiellement, la fréquence des ondes générées est sensiblement égale à 2,45 GHz.

On réalise donc un gain considérable d'énergie par rapport au dispositif de l'art antérieur dans lequel l'air sous pression chauffe le flux d'air entrant dans la turbine à gaz.

De surcroît, la première grille essentiellement métallique forme avantageusement un écran électromagnétique dégivrant, tout en filtrant l'air pénétrant dans l'entrée d'air.

Ainsi, les micro-ondes permettent-elles très avantageusement de faire fondre le givre qui peut se former sur la première grille essentiellement métallique.

Aussi, la première grille essentiellement métallique réfléchit avantageusement une partie des ondes électromagnétiques créant ainsi un rayonnement électromagnétique confiné dans l'enceinte.

Autrement dit, le givre accroché sur la surface de la première grille sera chauffé tant par la chaleur dégagée par les courants électriques qui se développent sur la surface des brins des mailles de la grille, que par l'énergie de l'onde absorbée par la grille dans la matière de la grille, que par l'énergie de l'onde renvoyée par le rayonnement de chaque brin de la grille, mais aussi par l'énergie de l'onde émise par les trous de la grille.

Dans ce mode de réalisation, l'espace délimité entre la première grille et une entrée du moteur, de préférence, une entrée de l'étage de compression de la turbine à gaz constitue une zone de confinement dans laquelle se propagent les micro-ondes.

De préférence mais non nécessairement, les moyens pour générer des micro-ondes comprennent en outre un brasseur d'ondes. On peut toutefois s'en dispenser, la fonction de brasseur d'ondes étant alors assurée par des éléments mobiles de l'étage de compression de la turbine à gaz qui redistribuent de façon homogène les ondes électromagnétiques dans l'enceinte. Selon une autre variante avantageuse, on se dispense du brasseur d'ondes afin de concentrer les ondes électromagnétiques dans une ou plusieurs zones que l'on souhaite préférentiellement dégivrer.

De manière avantageuse, les moyens pour générer des micro-ondes comprennent au moins un magnétron, un klystron, ou tout type d'appareil permettant d'assurer cette fonction, ce dernier étant de préférence relié à l'enceinte par l'intermédiaire d'un guide d'onde, ce dernier débouchant de préférence dans l'enceinte à l'aide d'une seule sortie.

Selon une variante avantageuse, le guide d'onde présente une forme circonférentielle pour répartir circonférentiellement les micro-ondes dans une enceinte qui présente une forme circonférentielle.

De préférence, l'une des extrémités du guide d'onde comporte en outre une plaque, de préférence amagnétique, perméable aux micro-ondes destinée à empêcher des corps étrangers de remonter dans le guide d'ondes vers le magnétron et de perturber son fonctionnement.

Selon une variante particulièrement avantageuse, la seconde ouverture , assure un écran électromagnétique en regard d'un étage de compression du moteur tout en réalisant un second filtrage de l'air entrant dans le moteur.

Dans cette variante, l'espace délimité entre les première et seconde grilles essentiellement métalliques forme avantageusement une zone de confinement dans laquelle peuvent se propager les micro-ondes.

De préférence mais pas exclusivement, la seconde grille est configurée pour s'étendre de manière annulaire autour d'un axe de l'étage de compression du moteur.

De manière préférentielle, l'enceinte forme un plenum.

Au sens de l'invention, il faut entendre par plenum un boitier dont les parois extérieures forment un « U », ledit boitier comprenant une entrée d'air radiale destinée à être disposée de manière annulaire autour d'un arbre d'un étage de compression.

Cela est particulièrement intéressant lorsque l'entrée d'air dans le moteur est annulaire, le plenum permettant ainsi de guider le flux d'air entrant vers l'entrée axiale de l'étage de compression.

Dans cette variante, le plénum constitue une partie de la zone de confinement pour les micro-ondes.

Selon une autre variante avantageuse car peu énergivore, l'enceinte est constituée par les première et seconde grilles qui sont attachées l'une à l'autre par leurs bords respectifs, l'enceinte étant alors délimitée par lesdites grilles jointives par leurs bords respectifs.

La présente invention concerne également un turbomoteur d'hélicoptère muni d'une entrée d'air comportant un dispositif de dégivrage conforme à l'invention.

Avantageusement, le dispositif de dégivrage selon l'invention est disposé en amont d'un étage de compression du turbomoteur.

L'invention sera mieux comprise et ses avantages apparaîtront mieux à la lecture de la description qui suit, d'un mode de réalisation indiqué à titre d'exemple non limitatif. La description se réfère à la figure unique annexée montrant une vue en coupe d'un turbomoteur d'hélicoptère dont l'entrée d'air est munie d'un dispositif de dégivrage conforme à la présente invention.

Comme on l'a déjà mentionné ci-dessus, la présente invention peut être utilisée dans tout type de moteurs à combustion, notamment dans les turbines à gaz équipant les turbomoteurs d'aéronefs et les moteurs industriels.

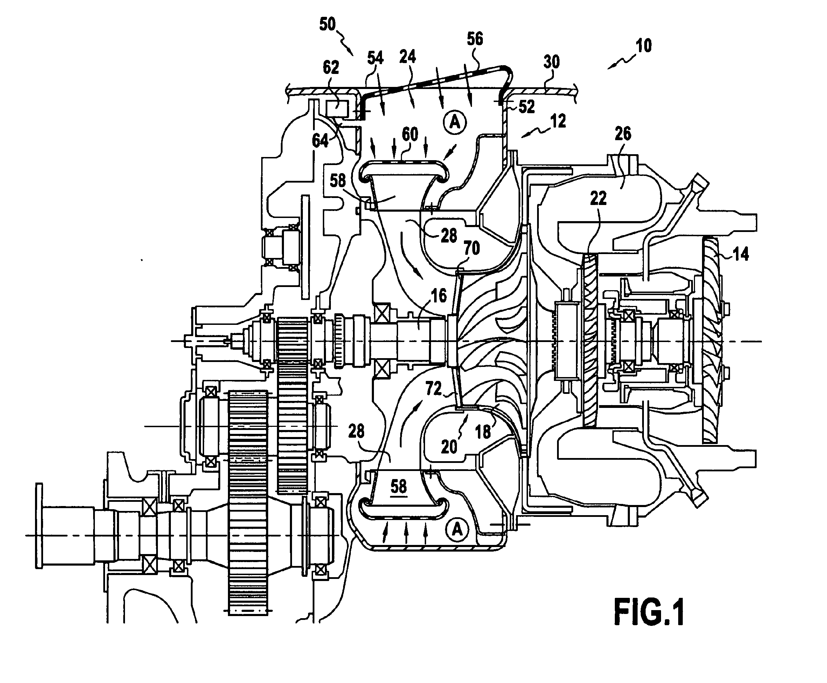

Sur la figure **1**, on a représenté partiellement en coupe un moteur à combustion interne constitué par un turbomoteur **10** d'hélicoptère comportant un générateur de gaz **12** et une turbine libre **14**.

Le générateur de gaz **12** comporte un arbre **16** sur lequel est monté une roue de compresseur centrifuge **18** disposée dans un étage de compression **20**, lequel arbre **16** porte également une roue de turbine **22**.

De manière connue par ailleurs, le turbomoteur comporte une entrée d'air **24** par laquelle un flux d'air frais entrant est guidé vers l'étage de compression **20**. L'air comprimé est ensuite envoyé vers une chambre de combustion **26**.

L'entrée d'air **24** du turbomoteur comporte une pluralité de veines **28** dans chacune desquelles le flux d'air frais entrant pénètre radialement avant d'être guidé pour entrer axialement dans l'étage de compression.

Le turbomoteur **10** représenté sur cette figure est muni d'un dispositif de dégivrage **50** conforme à la présente invention qui permet de dégivrer l'entrée d'air **24** du turbomoteur.

Selon l'invention, le dispositif de dégivrage **50** comporte une enceinte essentiellement métallique **52** pour l'entrée de l'air dans les veines d'entrée **28** du turbomoteur **10.**

De manière préférentielle, l'enceinte est fixée sur un carter **30** de l'hélicoptère.

L'enceinte forme ici un plenum **52** dont l'axe coïncide sensiblement avec celui de l'arbre **16** du générateur à gaz **12** et dont la hauteur est au moins égale à la longueur axiale des veines **28.**

Le plenum **52** comporte une portion s'étendant radialement et dont l'extrémité forme une première ouverture **54** radiale débouchant vers l'extérieur du turbomoteur **10** et par laquelle l'air frais entre dans le dispositif de dégivrage **50.**

Comme on le voit sur la figure, la première ouverture **54** est avantageusement munie d'une première grille essentiellement métallique **56** permettant notamment de filtrer l'air entrant dans l'enceinte **52.**

L'enceinte **52** comporte en outre une seconde ouverture **58** destinée à diriger l'air frais vers l'étage de compression **20** via les veines **28**, cette seconde ouverture **58** s'étendant en l'espèce de manière annulaire autour de l'axe de l'arbre **16** du générateur de gaz **12**.

Dans une variante avantageuse représentée sur la figure **1****,** la seconde ouverture **58** est munie d'une seconde grille essentiellement métallique **60** qui est elle aussi annulaire.

Comme on l'expliquera ci-après, le dispositif de dégivrage **50** selon l'invention peut fonctionner en l'absence de seconde grille **60**.

Pour améliorer encore la sécurité du turbomoteur **10**, on peut prévoir que les grilles **56** et **60** présentent, dans un plan de coupe axial, une forme en tête de champignon grâce à laquelle de l'air peut entrer par les bords axiaux de chacune des grilles malgré l'obturation par le givre de leur extrémité radiale en cas de panne du générateur d'ondes.

Conformément à invention, le dispositif de dégivrage **50** comporte en outre des moyens **62** pour générer des micro-ondes dans l'enceinte essentiellement métallique **52** et plus particulièrement dans l'espace **A** délimité par les première et seconde grilles essentiellement métalliques.

Lesdits moyens comportent de préférence un magnétron **62** pourvu d'un guide d'onde **64.**

Selon l'invention, la fréquence des micro-ondes générées est sensiblement égal à la fréquence de résonnance d'une molécule d'eau, c'est-à-dire environ 2,45 Ghz.

Ainsi, cet espace **A** constitue une zone de confinement pour les micro-ondes, c'est-à-dire qu'elles peuvent rebondir sur les bords de l'espace **A.**

Lorsque le turbomoteur **10** évolue en condition givrante, il apparaît que le givre a tendance à se former dans la zone **A.**

Dans une large mesure, on constate que le givre se forme sur la première grille **56** et, dans une moindre mesure sur la seconde grille **60.**

Selon la présente invention, les micro-ondes générées dans l'espace **A** excitent les molécules d'eau constituant le givre, lesquelles entrent alors en résonnance, ce qui a pour conséquence de les échauffer à une température supérieure à leur point de fusion à la suite de quoi le givre fond.

De surcroît, comme les première et seconde grilles **56,60** sont essentiellement métalliques, les micro-ondes donnent naissance à diverses interactions des ondes électromagnétiques dans les mailles des grilles, notamment le rayonnement qui a pour conséquence de rediriger les ondes sur le givre. En outre, les interactions des ondes électromagnétiques dans les mailles des grilles et/ou dans la matière qui constitue lesdites grilles, tels l'absorption de l'énergie électromagnétique et/ou l'apparition de courants induits circulant dans les mailles des grilles **56,60,** a pour conséquence d'élever la température des mailles et, par suite, d'empêcher avantageusement la formation de givre sur les première et seconde grilles **56,60,** ou de faire fondre le givre accroché sur ces mailles. Un intérêt majeur de l'invention est qu'il n'est pas nécessaire de chauffer tout le débit d'air qui transite dans l'espace **A** ni même toute la surface exposée à ce débit d'air, ce qui nécessiterait une énergie beaucoup plus importante que celle que fournit le magnétron **62** dans la présente invention.

En effet, le magnétron est une source d'énergie à faible niveau d'entropie comparée à l'utilisation d'air comprimé provenant de la sortie de l'étage de compression.

Un autre intérêt de la présente invention est de pouvoir utiliser des grilles dont les mailles sont plus fines que celles des grilles utilisées traditionnellement, ce qui permet d'améliorer le filtrage de l'air entrant. En effet, il n'était auparavant pas possible de prévoir des mailles de petites tailles en raison du risque élevé d'obturation de la grille par le givre, cette obturation se réalisant évidemment d'autant plus rapidement que les mailles sont petites.

Ainsi, grâce à la présente invention, il est possible de dégivrer l'entrée d'air **24** du turbomoteur **12** même lorsque ce dernier est à l'arrêt ou fonctionne au ralenti, alors que dans les dispositifs de l'art antérieur, le dégivrage à l'arrêt est réalisé manuellement.

De manière optionnelle, il est avantageux d'utiliser une antenne de décharge (non représentée ici) pour protéger les étages de compression d'une éventuelle formation de plasma en cas de dysfonctionnement du dispositif de dégivrage. En effet, dans certains cas, une pale de compresseur peut se comporter comme une antenne, entre la base et le sommet de laquelle peut se créer un champ électrique provoquant l'ionisation de l'air et donc la génération d'un plasma susceptible d'endommager l'extrémité de la pale.

Selon une variante avantageuse, une sonde de température qui sert à mesurer la température du débit d'air entrant assure la fonction d'antenne de décharge.

Selon une variante avantageuse, le dispositif de dégivrage **50** comporte en outre un système de régulation du magnétron **62** qui asservit sa consommation électrique en fonction du besoin de dégivrage.

Selon un autre mode de réalisation, le dispositif de dégivrage selon l'invention ne comporte pas de seconde grille essentiellement métallique.

Dans ce cas, la zone de confinement des micro-ondes est délimitée entre la première grille essentiellement métallique **56** et la roue de turbine **18** ou par tout autre élément disposé dans l'étage de compression **20** apte à jouer le rôle de bouclier électromagnétique.

Par ailleurs, le turbomoteur **10** comporte en outre des pales de pré-rotation **70, 72,** connues par ailleurs, disposées en amont de la roue de compresseur **18** à l'extrémité aval des veines **28.**

De manière connue, ces pales de pré-rotation permettent d'orienter le flux d'air entrant dans la roue de compresseur **18.**

Selon un aspect avantageux de l'invention, les pales de pré-rotation et ses articulations sont réalisées dans un matériau essentiellement perméable aux ondes électromagnétiques de manière à accroître le volume et les surfaces soumises à l'effet des micro-ondes.

Par « essentiellement perméable », on entend au sens de l'invention que la pièce concernée, notamment les pales de pré-rotation et ses articulations, peuvent être réalisée dans un matériau perméable aux micro-ondes tel un composite, incluant une partie métallique réfléchissante tel qu'un revêtement de surface à base de métal.

Un intérêt de la présente invention est donc de pouvoir dégivrer les pales de pré-rotation sans devoir utiliser un dispositif de dégivrage spécifique par ventilation interne tels que ceux que l'on rencontre habituellement dans certains turbomoteurs.

Grâce à cette invention, on peut donc avantageusement simplifier l'architecture de l'étage de compression du turbomoteur tout en prévenant la formation de givre.

## Revendications

1. Dispositif de dégivrage (50) d'une entrée d'air (24) d'une turbine à gaz d'un turbomoteur d'hélicoptère (10), **caractérisé en ce qu'**il comporte une enceinte (52) essentiellement métallique pour l'entrée d'air (24) dans ledit moteur, ladite enceinte comportant une première ouverture (54) pour l'entrée d'air dans l'enceinte (52), ladite première ouverture (54) étant munie d'une première grille essentiellement métallique (56), l'enceinte comportant en outre une seconde ouverture (58) destinée à diriger l'air vers une entrée de la turbine à gaz, ledit dispositif comportant en outre des moyens (62, 64) pour générer dans l'enceinte des ondes électromagnétiques ayant une fréquence permettant de faire fondre du givre, **en ce que** la seconde ouverture (58) est pourvue d'une seconde grille essentiellement métallique (60), et **en ce que** les première et seconde grilles (56,60) forment un écran électromagnétique dégivrant.

2. Dispositif de dégivrage selon la revendication 1, **caractérisé en ce que** la fréquence des ondes est sensiblement égale à la fréquence de résonnance d'une molécule d'eau.

3. Dispositif de dégivrage selon la revendication 1 ou 2, **caractérisé en ce que** les moyens pour générer des ondes comprennent un magnétron (62).

4. Dispositif de dégivrage selon l'une quelconque des revendications 1 à 3, **caractérisé en ce que** lesdits moyens comportent en outre un guide d'onde (64) reliant les moyens pour générer des ondes (62) à l'enceinte (52).

5. Dispositif de dégivrage selon la revendication 3 ou 4, **caractérisé en ce que** l'enceinte (52), la première grille (56) et/ou la deuxième grille (60), est réalisée dans un matériau revêtu d'une couche en matériau essentiellement métallique.

6. Dispositif de dégivrage selon l'une quelconque des revendications 1 à 5, **caractérisé en ce que** l'enceinte (52) forme un plenum.

7. Dispositif de dégivrage selon l'une quelconque des revendications 1 à 6, **caractérisé en ce que** l'enceinte (52) constitue une zone de confinement pour les ondes électromagnétiques.

8. Dispositif de dégivrage selon l'une quelconque des revendications 1 à 7, **caractérisé en ce qu'**il comporte au moins une antenne de décharge.

9. Turbomoteur d'hélicoptère (10) muni d'une entrée d'air **caractérisé en ce qu'**il comporte un dispositif de dégivrage (50) selon l'une quelconque des revendications 1 à 8.

10. Turbomoteur d'hélicoptère selon la revendication 9, **caractérisé en ce qu'**il comporte en outre des pales de pré-rotation disposées en amont d'une roue de compresseur, et **en ce que** lesdites pales sont réalisées dans un matériau essentiellement perméable aux ondes électromagnétiques.

## Claims

1. A de-icer device (50) for an air inlet (24) of a gas turbine of a helicopter turbine engine (10), **characterized in that** it comprises an essentially metallic enclosure (52) for admitting air (24) into said engine, said enclosure having a first opening (54) for admitting air into the enclosure (52), said first opening (54) being provided with a first essentially metallic grid (56), the enclosure further including a second opening (58) for directing the air towards an inlet of the gas turbine, said device further including wave generator means (62, 64) for generating electromagnetic waves in the enclosure at a frequency suitable for causing ice to melt, **in that** the second opening (58) is provided with a second essentially metallic grid (60) and **in that** the first and second grids (56, 60) form a deicing electromagnetic shield.

2. A de-icer device according to claim 1, **characterized in that** the frequency of the waves is substantially equal to the resonant frequency of a water molecule.

3. A de-icer device according to claim 1 or claim 2, **characterized in that** the wave generator means comprise a magnetron (62).

4. A de-icer device according to any one of claims 1 to 3, **characterized in that** said means further include a waveguide (64) connecting the wave-generator means (62) to the enclosure (52).

5. A de-icer device according to claim 3 or claim 4, **characterized in that** the enclosure (52), the first grid (56), and/or the second grid (60) are made of a material coated in a layer of an essentially metallic material.

6. A de-icer device according to any one of claims 1 to 5, **characterized in that** the enclosure (52) forms a plenum.

7. A de-icer device according to any one of claims 1 to 6, **characterized in that** the enclosure (52) constitutes a confinement zone for the electromagnetic waves.

8. A de-icer device according to any one of claims 1 to 7, **characterized in that** it includes at least one discharge antenna.

9. A helicopter turbine engine (10) provided with an air inlet and **characterized in that** it includes a de-icer device (50) according to any one of claims 1 to 8.

10. A helicopter turbine engine according to claim 9, **characterized in that** it further includes pre-rotation blades disposed upstream from the compressor wheel, and **in that** said blades are made of a material that is essentially permeable to the electromagnetic waves.

## Patentansprüche

1. Vorrichtung zur Enteisung (50) eines Lufteinlasses (24) einer Gasturbine eines Hubschraubertriebwerks (10), **dadurch gekennzeichnet, daß** sie eine im wesentlichen metallische Umschließung (52) für den Lufteinlaß (24) in dem Triebwerk umfaßt, wobei die Umschließung eine erste Öffnung (54) für den Lufteintritt in die Umschließung (52) umfaßt, wobei die erste Öffnung (54) mit einem im wesentlichen metallischen ersten Gitter (56) ausgestattet ist, wobei die Umschließung ferner eine zweite Öffnung (58) aufweist, die dazu bestimmt ist, die Luft in Richtung eines Einlasses der Gasturbine zu leiten, wobei die Vorrichtung ferner Mittel (62, 64) umfaßt, um in der Umschließung elektromagnetische Wellen mit einer Frequenz, die das Schmelzen des Eises ermöglicht, zu erzeugen, daß die zweite Öffnung (58) mit einem im wesentlichen metallischen zweiten Gitter (60) versehen ist und daß das erste und das zweite Gitter (56, 60) eine enteisende elektromagnetische Abschirmung bilden.

2. Enteisungsvorrichtung nach Anspruch 1, **dadurch gekennzeichnet, daß** die Frequenz der Wellen im wesentlichen gleich der Resonanzfrequenz eines Wassermoleküls ist.

3. Enteisungsvorrichtung nach Anspruch 1 oder 2, **dadurch gekennzeichnet, daß** die Mittel zur Erzeugung von Wellen ein Magnetron (62) umfassen.

4. Enteisungsvorrichtung nach einem der Ansprüche 1 bis 3, **dadurch gekennzeichnet, daß** die Mittel ferner einen Wellenleiter (64) umfassen, der die Mittel zur Erzeugung von Wellen (62) mit der Umschließung (52) verbindet.

5. Enteisungsvorrichtung nach Anspruch 3 oder 4, **dadurch gekennzeichnet, daß** die Umschließung (52), das erste Gitter (56) und/oder das zweite Gitter (60) aus einem Material gefertigt ist, das mit einer Schicht aus einem im wesentlichen metallischen Material überzogen ist.

6. Enteisungsvorrichtung nach einem der Ansprüche 1 bis 5, **dadurch gekennzeichnet, daß** die Umschließung (52) einen Sammelraum bildet.

7. Enteisungsvorrichtung nach einem der Ansprüche 1 bis 6, **dadurch gekennzeichnet, daß** die Umschließung (52) einen Einschlußbereich für die elektromagnetischen Wellen bildet.

8. Enteisungsvorrichtung nach einem der Ansprüche 1 bis 7, **dadurch gekennzeichnet, daß** sie wenigstens eine Entladungsantenne umfaßt.

9. Hubschraubertriebwerk (10), das mit einem Lufteinaß versehen ist, **dadurch gekennzeichnet, daß** es eine Enteisungsvorrichtung (50) nach einem der Ansprüche 1 bis 8 umfaßt.

10. Hubschraubertriebwerk nach Anspruch 9, **dadurch gekennzeichnet, daß** es ferner Vorrotationsschaufeln umfaßt, die einem Verdichterrad vorgeordnet sind, und daß die Schaufeln aus einem für die elektromagnetischen Wellen im wesentlichen durchlässigen Material gefertigt sind.
